# EUROPÄISCHE PATENTANMELDUNG

(11) **EP 3 854 532 A1**
(43) Veröffentlichungstag der Anmeldung: **28.07.2021**
(21) Anmeldenummer: 20186380.0
(22) Anmeldetag: 17.07.2020
(51) Int. Cl.: B25D 11/00, B25D 16/00

(54) **HANDWERKZEUGMASCHINE, WERKZEUG UND HANDWERKZEUGMASCHINENSYSTEM MIT BESTIMMTEM DREHZAHL-SCHLAGLEISTUNGS-VERHÄLTNIS**

(30) Priorität: 19.08.2019 EP 19192219; 27.08.2019 EP 19193854; 04.09.2019 EP 19195363
(71) Anmelder: Hilti Aktiengesellschaft, 9494 Schaan (LI)
(72) Erfinder: Knyrim, Maximilian, 89584 Ehingen (DE); Hartmann, Markus, 87665 Mauerstetten (DE); Plümacher, Bastian, 86899 Landsberg am Lech (DE); Koch, Olaf, 86916 Kaufering (DE)
(74) Vertreter: Hilti Aktiengesellschaft Corporate Intellectual Property

(57) **Zusammenfassung**

Bohrhammer (12) mit einem Schlagwerk (32) und einem Drehantrieb (34), wobei der Bohrhammer (12) eingerichtet ist, ein Werkzeug (18) mit einer Drehzahl n um eine Längsachse (L) des Werkzeugs (18) zu rotieren und mit einer abgegebenen Schlagleistung PS entlang der Längsachse (L) mit einer Schlagbewegung anzutreiben. Am Arbeitspunkt ist wenigstens eine Bedingung erfüllt:

1. Das Verhältnis der abgegebenen Schlagleistung PS zur Drehzahl n beträgt mindestens 3,5 W/U/Min.;

2. in Abhängigkeit von der abgegebenen Schlagleistung PS beträgt die Drehzahl n höchstens ((PS/N - 300)² /2000 +150) U/Min.;

3. bei einer infinitesimalen Änderungen der abgegebenen Schlagleistung PS ändert sich die Drehzahl n um höchstens 0,1 U/Min./W erfüllt ist.

## Beschreibung

Die vorliegende Erfindung betrifft eine Handwerkzeugmaschine, insbesondere Bohrhammer, mit einem Schlagwerk und einem Drehantrieb, wobei die Handwerkzeugmaschine eingerichtet ist, ein Werkzeug mit einer Drehzahl n um eine Längsachse des Werkzeugs zu rotieren und mit einer abgegebenen Schlagleistung PS entlang der Längsachse mit einer Schlagbewegung anzutreiben, und wobei die Handwerkzeugmaschine tragbar ist. Weiter betrifft die Erfindung ein Werkzeug und ein Handwerkzeugmaschinensystem.

Die Inhalte der Beschreibungen, der Ansprüche und der Zeichnungen der europäischen Anmeldungen EP19192219A vom 19.08.2019, EP19193854 vom 27.08.2019 und EP19195363A vom 04.09.2019 bilden im Wege der ausdrücklichen Bezugnahme einen Teil dieser Beschreibung.

Aus ökologischen Gründen als auch aus Kostengründen heraus besteht ein besonderer Bedarf an besonders effektiv und effizient arbeitenden Handwerkzeugmaschinen, beispielsweise Bohrhämmern, zugehörigen Werkzeugen und, insbesondere eine Handwerkzeugmaschine und ein Werkzeug für die Handwerkzeugmaschine aufweisenden, Handwerkzeugsystemen. Dies gilt umso mehr für die gattungsgemäß tragbaren Handwerkzeugmaschinen, nachdem eine höhere Effizienz oftmals mit der Möglichkeit des Einsatzes leichterer Antriebseinheiten und damit mit möglichen Gewichtsreduktionen der Handwerkzeugmaschinen einhergeht.

Um diesem Bedarf Rechnung zu tragen ist es daher eine Aufgabe der vorliegenden Erfindung, mit besonders hoher Effizienz betreibbare, gattungsgemäße Handwerkzeugmaschinen, Werkzeuge und Handwerkzeugmaschinensysteme zur Verfügung zu stellen.

Gelöst wird die Aufgabe durch eine Handwerkzeugmaschine, insbesondere ein Bohrhammer, mit einem Schlagwerk und einem Drehantrieb, wobei die Handwerkzeugmaschine eingerichtet ist, ein Werkzeug mit einer Drehzahl n um eine Längsachse des Werkzeugs zu rotieren und mit einer abgegebenen Schlagleistung PS entlang der Längsachse mit einer Schlagbewegung anzutreiben, und wobei die Handwerkzeugmaschine tragbar ist, wobei zumindest an einem Arbeitspunkt der Handwerkzeugmaschine wenigstens eine der Bedingungen
1. das Verhältnis der abgegebenen Schlagleistung PS zur Drehzahl n beträgt mindestens 3,5 W/U/Min.;
2. in Abhängigkeit von der abgegebenen Schlagleistung PS beträgt die Drehzahl n höchstens ((PS/W-300)^2/2000+150) U/Min.;
3. bei einer infinitesimalen Änderungen der abgegebenen Schlagleistung PS ändert sich die Drehzahl n um höchstens 0,1 U/Min. / W;
erfüllt ist.

Dementsprechend können Handwerkzeugmaschinen, die jeweils eine der drei Bedingungen erfüllen, jeweils für sich eine Untergruppe erfindungsgemäßer Handwerkzeugmaschinen bilden.

Denkbar ist, dass eine Handwerkzeugmaschine genau zwei der drei Bedingungen erfüllt, insbesondere die Bedingungen 1 und 2, 1 und 3 oder 2 und 3. Sie kann alternativ und besonders bevorzugt auch alle drei Bedingungen erfüllen.

Der Erfindung liegt dabei der Gedanke zugrunde, dass eine Zerkleinerung derartiger Gesteine, beispielsweise zur Ausbildung eines Bohrloches, üblicherweise primär durch die Schlagbewegung erfolgen kann. Insbesondere kann die Zerkleinerung mittels einer Werkzeugspitze eines in der Werkzeugaufnahme aufgenommenen Werkzeugs, beispielsweise ein Gesteinsbohrer, in Form eines rhythmischen Schlagens, also eines Meißelns, erfolgen.

Die parallel erfolgende Drehbewegung verfolgt üblicherweise bei der Zerkleinerung den Zweck, die Werkzeugspitze zu drehen und/oder zu versetzen, so dass die Zerkleinerung über eine gewisse Bearbeitungsfläche hinweg, d. h. nicht nur an einer einzelnen Stelle, erfolgen kann. Zudem wird die Drehbewegung - zumindest bei Werkzeugen mit einer entlang ihrer Längsachse ausgebildeten Helixstruktur wie beispielsweise bei Gesteinsspiralbohrern - zur Förderung von an der Werkzeugspitze erzeugtem Bohrklein benötigt.

Jedoch kommt es bei steigenden Drehzahlen n zu erheblichen, zum Teil überproportional ansteigenden, Reibungsverlusten.

Somit lassen sich erhebliche Energieeinsparungen erzielen, wenn die Handwerkzeugmaschine wie erfindungsgemäß vorgesehen, zumindest am Arbeitspunkt eine im Verhältnis zur abgegebenen Schlagleistung PS vergleichsweise langsame Drehbewegung ausführt. Vorzugsweise ist die Drehbewegung am Arbeitspunkt jedoch dennoch so schnell, dass ein ausreichender Drehversatz des Werkzeugs zwischen zwei Schlägen erfolgen kann. Je nach Art des verwendeten Werkzeugs kann die Drehzahl auch in Abhängigkeit einer erforderlichen Bohrkleinfördergeschwindigkeit gewählt sein, insbesondere sofern zwischen diesen ein baulich bedingter Zusammenhang besteht. Erfindungsgemäß wird gemäß den oben genannten Bedingungen 1 und 2 dieses Verhältnis zumindest für den Arbeitspunkt unmittelbar begrenzt.

Auch Bedingung 3 definiert, insbesondere über eine Steigung am Arbeitspunkt, zumindest implizit, eine Grenze für das Verhältnis am Arbeitspunkt. Erfahrungsgemäß besteht, insbesondere bei Handwerkzeugmaschinen mit einer Antriebseinheit, ein fester Zusammenhang zwischen der Änderung der Drehzahl n bei infinitesimalen Änderungen der abgegebenen Schlagleistung PS einerseits und der abgegebenen Schlagleistung PS andererseits. Dieser Zusammenhang kann beispielsweise einer Kurve dritter Potenz beziehungsweise einer entsprechenden Wurzelfunktion folgen, sodass damit verbunden gleichzeitig auch maximale Drehzahlen n außerhalb des Arbeitspunktes, beispielsweise bei abgeregelter Drehzahl bei einer Handwerkzeugmaschine mit einer Antriebseinheit, geräteseitig vorgesehen sein können. Somit können erfindungsgemäß auch Handwerkzeugmaschine bereitgestellt werden, die nicht nur im Arbeitspunkt, sondern beispielsweise auch in einem Teillastbetrieb besonders effizient arbeiten.

Unter einer "infinitesimalen Änderung" einer Messgröße wie beispielsweise die abgegebene Schlagleistung PS kann eine den jeweiligen technischen Umständen und Möglichkeiten entsprechend möglichst geringfügige Änderung, beispielsweise von weniger höchstens 1 Prozent, bevorzugt von höchstens einem Promille, des Ausgangswertes der Messgröße entsprechen.

Bei besonders effizienten Handwerkzeugmaschinen kann sich zumindest am Arbeitspunkt bei infinitesimalen Änderungen der abgegebenen Schlagleistung PS die Drehzahl n um höchstens 0,08 U/Min. / W und besonders bevorzugt um höchstens 0,08 U/Min. / W ändern.

Ferner lassen sich durch die Erfindung Werkzeug- und/oder Schädigungen des zu bearbeitenden Gesteins durch Überhitzung auf Grund von Reibung und Hitze vermeiden. Auch lässt sich die Arbeitssicherheit steigern.

Der Arbeitspunkt kann einem bohrhämmemden Betrieb der Handwerkzeugmaschine entsprechen. Insbesondere kann er einem Volllastbetrieb der Handwerkzeugmaschine entsprechen. Alternativ oder ergänzend kann der Arbeitspunkt einem Betriebszustand mit gerätebedingt höchstmöglicher abgegebener Schlagleistung PS oder höchstmöglicher Drehfrequenz n entsprechen.

Die Handwerkzeugmaschine kann insbesondere zur Bearbeitung von natürlichen oder künstlichen Gesteinen, beispielsweise Mauerwerk und/oder zementhaltige Gesteine, eingerichtet sein.

Zur Abgrenzung zu beispielsweise reinen Meißelmaschinen kann die Drehzahl am Arbeitspunkt mindestens 1 U/Min., vorzugsweise mindestens 20 U/Min., betragen.

Alternativ oder ergänzend kann ein Umsetzwinkel, also der Winkel, um den das Werkzeug zwischen zwei Schlägen versetzt wird, zumindest am Arbeitspunkt mindestens 15, bevorzugt mindestens 20 Grad betragen.

Alternativ oder ergänzend kann die Drehzahl n in Abhängigkeit von der abgegebenen Schlagleistung PS mindestens die Hälfte des Höchstwertes gemäß wenigstens einer der drei Bedingungen betragen.

Die abgegebene Schlagleistung PS kann insbesondere von einer Einzelschlagenergie, d. h. der bei einem einzelnen Schlag abgebenen Energiemenge, und der Schlagfrequenz f, mit der Schläge ausgeführt werden, abhängen.

Somit liegt der Erfindung weiter die Erkenntnis zugrunde, dass Handwerkzeugmaschinen, die zumindest am Arbeitspunkt eine Kombination einer Schlagbewegung mit einer Drehbewegung ermöglichen, dadurch verbessert werden können, dass zumindest an diesem Arbeitspunkt das Verhältnis zwischen der Drehzahl n und der abgegebenen Schlagleistung PS ausgewählt und/oder eingestellt wird.

Eine besonders gut tragbare Handwerkzeugmaschine kann höchstens eine Antriebseinheit, insbesondere einen Motor, aufweisen, durch die das Schlagwerk und der Drehantrieb gemeinsam antreibbar sind.

Allgemein kann die Handwerkzeugmaschine höchstens eine Antriebseinheit, insbesondere einen Motor, zum Antrieb des Schlagwerks und des Drehantriebs aufweisen. Mit anderen Worten können das Schlagwerk und der Drehantrieb mittels einer gemeinsamen Antriebseinheit angetrieben sein. Alternativ ist auch ein getrennter Antrieb, insbesondere mittels wenigstens zweier Antriebseinheiten denkbar. Die Drehzahl n und/oder die abgegebene Schlagleistung PS oder deren Verhältnis zueinander können geräteseitig festgelegt oder festlegbar sein. Beispielsweise können am Arbeitspunkt ein oder mehrere Getriebe der Handwerkzeugmaschine durch die Handwerkzeugmaschine selbsttätig in Benutzung und/oder ausgewählt sein. Das oder die Getriebe können auf den Arbeitspunkt abgestimmte Übersetzungsverhältnisse aufweisen.

Bei Handwerkzeugmaschinen mit wenigstens zwei Antriebseinheiten, durch die insbesondere die Drehzahl n zumindest innerhalb eines Bereichs unabhängig von der abgegebenen Schlagleistung PS eingestellt oder einstellbar ist, kann vorgesehen sein, die Drehzahl n auf höchstens 1400 U/Min., bevorzugt auf höchstens 700 U/Min., zu begrenzen.

Die abgegebene Schlagleistung PS kann zumindest am Arbeitspunkt zwischen 200 W und 2000 W, vorzugsweise zwischen 200 W und 1000 W, betragen.

Besonders bevorzugt kann die abgegebene Schlagleistung PS am Arbeitspunkt mindestens 300 W betragen.

Denkbar ist, in einem niedrigen Bereich der abgegebenen Schlagleistung PS, beispielsweise bei weniger als 500 W oder alternativ bei weniger als 300 W, eine konstante höchstmögliche Drehzahl n, beispielsweise 150 U/Min., vorzusehen.

Das Schlagwerk kann als elektrisches, beispielsweise als elektropneumatisches, Schlagwerk ausgebildet sein.

Aus Gründen der Weite der Einstellbarkeit der Handwerkzeugmaschine ist es günstig, wenn die Handwerkzeugmaschine ein mehrstufiges Getriebe aufweist.

Die Handwerkzeugmaschine kann eingerichtet sein, ein Getriebe anhand oder zumindest unter Berücksichtigung des ermittelten oder eingestellten Typs des aufgenommenen Werkzeugs zu steuern, insbesondere davon abhängig eine der Getriebestufen eines mehrstufigen Getriebes zu wählen. Alternativ oder ergänzend kann bei Handwerkzeugmaschinen mit wenigstens zwei Antriebseinheiten auch ein Verhältnis der Geschwindigkeiten der beiden Antriebseinheiten, insbesondere in Abhängigkeit vom eingestellten oder ermittelten Typ des aufgenommenen Werkzeugs, zueinander eingestellt sein oder einstellbar sein.

Denkbar ist bei einer Handwerkzeugmaschine mit unterschiedlichen Betriebsmodi, beispielsweise einem reinen Drehbewegungs- bzw. Bohrmodus und einem Bohrhammermodus entsprechend dem Arbeitspunkt, die Handwerkzeugmaschine derart einzurichten, dass durch einen Wechsel in den Bohrhammermodus oder bei Erreichen des Arbeitspunkts die Drehzahl n einen Höchstwert gemäß zumindest einer der drei Bedingungen beschränkt wird und bei Verlassen des Bohrhammermodus oder des Arbeitspunkts diese Beschränkung aufgehoben wird und/oder der Höchstwert der Drehzahl n auf einen höheren Wert eingestellt wird.

Die Handwerkzeugmaschine kann eine Werkzeugerkennungsvorrichtung aufweisen zur Identifikation eines Typs eines in der Werkzeugaufnahme eingesetzten Werkzeugs. Alternativ oder ergänzend kann der Typ des in der Werkzeugaufnahme eingesetzten Werkzeugs auch durch einen Benutzer der Handwerkzeugmaschine einstellbar sein.

Die Handwerkzeugmaschine kann auch eingerichtet sein, in Abhängigkeit von dem Typ des Werkzeugs, vorzugsweise zumindest am Arbeitspunkt, die Drehzahl n auf einen Höchstwert, der wenigstens einer der drei Bedingungen genügt, zu beschränken. Beispielsweise kann bei einem als Saugbohrer oder als Hohlbohrer ausgebildeten Werkzeug ein besonders geringer Höchstwert der Drehzahl n eingestellt werden, wohingegen bei einem eine Helixstruktur aufweisenden Werkzeug ein etwas höherer Höchstwert, vorzugsweise allerdings dennoch höchstens wenigstens einer der drei erfindungsgemäßen Bedingungen entsprechend, eingestellt wird.

Die Handwerkzeugmaschine kann insbesondere eingerichtet sein, den Wert der Drehzahl n in Abhängigkeit von der abgegebenen Schlagleistung PS, insbesondere auch unter Berücksichtigung eines Typs des eingesetzten Werkzeugs, zu variieren. Dem liegt der Gedanke zugrunde, dass bei sehr niedrigen abgegebenen Schlagleistungen PS beispielsweise eine Mindestdrehzahl n durch diese Variation sichergestellt sein kann. Zumindest bei einzelnen Werkzeugtypen kann der Anstieg der Reibung durch die Drehbewegung geringer als entsprechend einer dritten Potenz ausfallen, sodass auch relativ zur abgegebenen Schlagleistung PS verhältnismäßig höhere Drehzahlen n nutzbar sind.

Ist bei der Handwerkzeugmaschine die insgesamt verfügbare Leistung begrenzt, so ermöglicht dies auch, einen größeren Anteil der Gesamtleistung auf die Schlagbewegung zu richten, sodass sich bei gleicher Gesamtleistung der im Gestein erzielte Vortrieb steigern lässt. Alternativ oder ergänzend kann auch unter Beibehaltung des erzielten Vortriebs die eingesetzte Gesamtleistung reduziert werden.

Unter einem elektrischen Schlagwerk können elektromechanisch arbeitende Schlagwerke, insbesondere mit einem eine Rotation erzeugenden Antrieb, beispielsweise Nockenschlagwerke oder Rastenschlagwerke, elektropneumatische, das heißt, eine Luftkammer zur Übertragung und/oder Transformation der Schlagbewegung enthaltende, Schlagwerke sowie elektromagnetische Schlagwerke, beispielsweise auf dem Prinzip einer Railgun beruhende und/oder einen Linearmotor aufweisende Schlagwerke, verstanden werden. Das Schlagwerk kann ein direktes Schlagwerk, also mit einem rotationsbewegungsfreien Antrieb, oder ein indirektes Schlagwerk, also mit einem Antrieb auf Basis einer Rotationsbewegung, sein.

Weist die Handwerkzeugmaschine eine pneumatische, insbesondere eine elektropneumatische, Bohrkleinfördereinrichtung auf, so können besonders geringe Drehzahlen n verwendet werden, da eine Bohrkleinförderung durch die Bohrkleinfördereinrichtung erfolgen kann. Die Bohrkleinfördereinrichtung kann eine Saugvorrichtung sein oder eine solche aufweisen.

Unter einer tragbaren Handwerkzeugmaschine kann eine Handwerkzeugmaschine verstanden werden mit einem Gewicht von höchstens 25 kg. Alternativ oder ergänzend kann unter einer tragbaren Handwerkzeugmaschine eine Handwerkzeugmaschine verstanden werden, deren abgegebene Schlagleistung PS auf höchstens 2 kW, besonders bevorzugt auf höchstens 1 kW, begrenzt ist.

Besonders bevorzugt ist die Handwerkzeugmaschine kabellos betreibbar. Sie kann einen Akkumulator, insbesondere einen Lithium-haltigen, Akkumulator, aufweisen. Die Handwerkzeugmaschine kann beispielsweise einen tragbaren Stromspeicher, beispielsweise einen wiederaufladbaren Akkumulator, aufweisen. Dabei lassen sich durch die erfindungsgemäß erzielten Effektivitäts- und Effizienzsteigerungen besonders lange Laufzeiten mit einer einzigen Akkumulatorladung erzielen.

Erfindungsgemäß können das oder die Getriebe besonders hohe, beispielsweise 50:1, Untersetzungsverhältnisse aufweisen. Daher sind Handwerkzeugmaschine besonders bevorzugt, die wenigstens eine Freilaufkupplung, ein Kulissengetriebe oder ein Kreisschubgetriebe umfassen. So sind beispielsweise auch Kombinationen der Freilaufkupplung mit dem Kulissengetriebe und/oder dem Kreisschubgetriebe denkbar. Weitere erfindungsgemäße Details zu besonders vorteilhaften Ausgestaltungen der Freilaufkupplung, des Kulissengetriebes sowie des Kreisschubgetriebes finden sich in den durch Bezugnahme als Teil dieser Beschreibung eingebundenen, eingangs genannten europäischen Patentanmeldungen.

Bei einem eine Helixstruktur aufweisenden Werkzeug für eine erfindungsgemäße Handwerkzeugmaschine kann die Steigung der Helixstruktur gegenüber bekannten Helixstrukturen, insbesondere von Werkzeugen zur Bearbeitung von Gesteinen, erhöht sein.

In den Rahmen der Erfindung fällt des Weiteren ein Werkzeug für eine erfindungsgemäße Handwerkzeugmaschine, umfassend eine Werkzeugspitze, einen Werkzeugschaft sowie ein Einsteckende zur Aufnahme des Werkzeugs in der Werkzeugaufnahme der Handwerkzeugmaschine, wobei zumindest entlang des Werkzeugschafts ein Materialtransportkanal ausgebildet ist, wobei der Materialtransportkanal eine Mindestquerschnittsfläche von 19 mm² oder mindestens von 6 %, besonders bevorzugt von mindestens 12%, der Querschnittsfläche des durch das Werkzeug erzeugbaren Bohrloches aufweist. Insbesondere wenn mit vergleichsweise niedrigen Drehzahlen n gearbeitet wird, können vermehrt größere Bohrklein-Teilchen entstehen, die aufgrund des vergleichsweise großen Materialtransportkanals ebenfalls sicher abtransportiert werden können. Eine Verstopfung des Werkzeugs kann somit auch bei im Verhältnis zur Schlagfrequenz f niedrigen Drehzahlen n vermieden werden.

Allgemein kann das Werkzeug als Hohlbohrer ausgebildet sein.

Ein solches Werkzeug ermöglicht eine besonders leistungsstarke Bohrkleinförderung entweder durch den Materialtransportkanal hindurch oder durch ein Spülfluid, das vorzugsweise über den Materialtransportkanal zur Werkzeugspitze befördert wird, sodass Bohrklein zum Abtransport von der Werkzeugspitze wegspült werden kann.

Allgemein können das Werkzeug und/oder die Handwerkzeugmaschine eingerichtet sein, das Bohrklein mechanisch, pneumatisch oder hydraulisch zu fördern.

Insbesondere kann das Werkzeug dazu als Saugbohrer ausgebildet sein. Die Bohrfördereinrichtung kann eine, insbesondere auf das Werkzeug angepasste, Saugeinrichtung aufweisen.

Auch fällt in den Rahmen der Erfindung eine Verwendung eines erfindungsgemäßen Werkzeugs zur Bearbeitung eines natürlichen oder künstlichen Gesteins.

Auch wird die Aufgabe gelöst durch ein Handwerkzeugmaschinensystem, umfassend eine erfindungsgemäße Handwerkzeugmaschine und ein erfindungsgemäßes Werkzeug.

Das Handwerkzeugmaschinensystem kann zur Bearbeitung von natürlichen oder künstlichen Gesteinen eingerichtet sein.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, aus den Ansprüchen sowie aus der Beschreibung und den Figuren der Zeichnung, die ebenfalls erfindungswesentliche Einzelheiten zeigt, der durch Bezugnahme mit eingebundenen, eingangs genannten europäischen Patentanmeldungen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

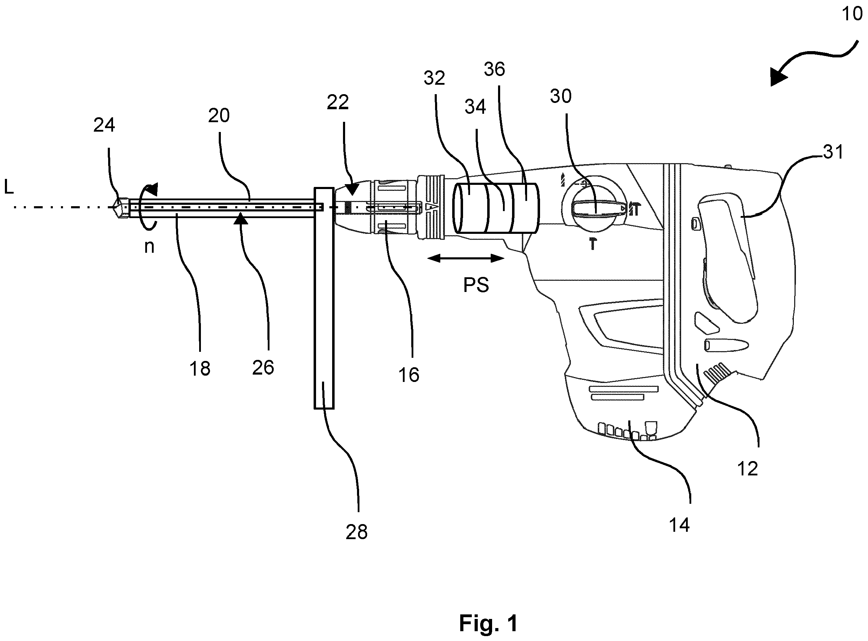

**Die einzige Figur (****Fig. 1****) zeigt** ein Handwerkzeugmaschinensystem.

Ein Handwerkzeugmaschinensystem **10** weist eine Handwerkzeugmaschine **12** auf. Die Handwerkzeugmaschine 12 ist kabellos betreibbar. Dazu weist sie einen wiederaufladbaren Akkumulator **14** auf. Sie ist als tragbares Gerät ausgebildet. Sie weist vorzugsweise ein Gewicht zwischen 5 und 15 kg und allgemein von weniger als 25 kg auf.

Sie weist ferner eine Werkzeugaufnahme **16** auf.

In dieser ist ein Werkzeug **18** aufgenommen. Dazu weist das Werkzeug 18 einen Werkzeugschaft **20** auf, an dessen einem Ende ein Einsteckende **22** und an dessen anderem Ende eine Werkzeugspitze **24** ausgebildet sind.

Das Werkzeug 18 ist als Hohlbohrer und insbesondere als Saugbohrer ausgebildet. Dazu weist es einen im Inneren des Werkzeugschafts 20 verlaufenden, in Fig. 1 schematisch dargestellten Materialtransportkanal **26** auf, über den aus der Umgebung der Werkzeugspitze 24 abgesaugtes Bohrklein zu einer Bohrkleinfördereinrichtung **28** gefördert werden kann.

Der Materialtransportkanal 26 weist eine Querschnittsfläche von 15% des Querschnitts eines durch das Werkzeug 18 zu schaffenden Bohrlochs auf.

Des Weiteren weist die Handwerkzeugmaschine 12 einen Betriebsmoduswahlschalter **30** zur Umschaltung zwischen verschiedenen Betriebsmodi, insbesondere zur Umschaltung zwischen einem reinen Bohrmodus, einem reinen Meißelmodus und einem Bohrhammermodus, auf. In der gezeigten Stellung des Betriebsmoduswahlschalters 30 ist der Bohrhammermodus ausgewählt.
Die Handwerkzeugmaschine 12 weist weiter ein elektropneumatisches Schlagwerk **32** und einen Drehantrieb **34** auf. Das Schlagwerk 32 und der Drehantrieb 34 werden von einer gemeinsamen Antriebseinheit **36**, einem Elektromotor, angetrieben. Die Handwerkzeugmaschine 12 ist dabei eingerichtet, das in der Werkzeugaufnahme 16 aufgenommene Werkzeug 18 mit einer Drehzahl **n** um eine Längsachse **L** des Werkzeugs 18 zu rotieren und entlang der Längsachse L mit einer Schlagbewegung anzutreiben, sodass eine Schlagleistung **PS** abgegeben wird.

Die Handwerkzeugmaschine 12 weist wenigstens ein Getriebe auf. Das Getriebe kann beispielsweise eine Freilaufkupplung, ein Kulissengetriebe oder ein Kreisschubgetriebe entsprechend der eingangs genannten, durch Bezugnahme eingebundenen europäischen Patentanmeldungen aufweisen.

Mittels eines Betätigungshebels **31** lässt sich die Handwerkzeugmaschine 12 in Gang setzen und insbesondere an einem Arbeitspunkt mit einer geräteseitig bedingten höchstmöglichen abgegebenen Schlagleistung PS betreiben.

In diesem Ausführungsbeispiel beträgt das Verhältnis der abgegebenen Schlagleistung PS zur Drehzahl n am Arbeitspunkt 4 W/U/Min., insbesondere bei einer abgegebenen Schlagleistung PS von 0,5 kW und einer Drehzahl n von 125 U/Min.

Im Folgenden werden weitere Ausführungsbeispiele geschildert, die, soweit ausdrücklich nicht anders geschildert, diesem vorangehenden Ausführungsbeispiel entsprechen.

Bei einem insbesondere auf den Einsatz eines als Hohlbohrer ausgebildeten Werkzeugs 18 abgestimmten Ausführungsbeispiel der Handwerkzeugmaschine 12 beträgt die abgegebene Schlagleistung PS ebenfalls 0,5 kW bei einer Drehzahl von 5*10¹ U/Min.

Diese Handwerkzeugmaschine 12 ist eingerichtet, am Arbeitspunkt eine Einzelschlagenergie von 10¹ Joule bei einer Schlagfrequenz f von 5*10¹ Hz zu erzeugen. Diese Handwerkzeugmaschine 12 weist eine Werkzeugerkennungsvorrichtung auf oder gemäß einer besonderen Ausführungsform alternativ einen Werkzeugwahlschalter, mit dem ein Benutzer der Handwerkzeugmaschine 12 einen Werkzeugtyp einstellen kann, auf. Die Handwerkzeugmaschine 12 ist sodann eingerichtet, bei Erkennen bzw. Einstellen eines Hohlbohrers als Werkzeugtyp die Drehzahl auf beispielsweise höchstens 5*10¹ U/Min. abzusenken und bei anderen Werkzeugtypen, beispielsweise Gesteinsbohrern mit Helixstruktur, zu erhöhen. Dazu weist die Handwerkzeugmaschine 12 im Gegensatz zum vorangehenden Ausführungsbeispiel zwei Antriebseinheiten 36 auf zum getrennten Antrieb des Schlagwerks 32 und des Drehantriebs 32. Hierdurch ist die Handwerkzeugmaschine 12 auch in der Lage, die bei einem Hohlbohrer als Werkzeug 18 beispielhaft genannte Drehzahl n von 5*10¹ U/Min. - oder eine andere, wenigstens einer der drei Bedingungen entsprechende, geringe Drehzahl n - konstant und unabhängig von der abgegebenen Schlagleistung PS zu halten.

Bei einer weiteren, abgewandelten Ausführungsform, vorzugsweise wiederum mit lediglich einer gemeinsamen Antriebseinheit 36, weist die Handwerkzeugmaschine 12 ein mehrstufiges Getriebe auf. Die Handwerkzeugmaschine 12 ist eingerichtet, das Getriebe je nach erkanntem bzw. eingestellten Werkzeugtyp umzuschalten. Insbesondere wird eine besonders hoch untersetzte Schaltstufe des Getriebes im Falle eines Hohlbohrers eingelegt.

Auch dieses Getriebe kann beispielsweise eine Freilaufkupplung, ein Kulissengetriebe oder ein Kreisschubgetriebe entsprechend der eingangs genannten, durch Bezugnahme eingebundenen europäischen Patentanmeldungen aufweisen.

Die Handwerkzeugmaschinen 12 gemäß diesen vorgenannten Ausführungsbeispielen sind somit eingerichtet, die 1. Bedingung zu erfüllen, durch die am Arbeitspunkt mit 0,5 kW eine Drehzahl n von höchstens ca. 170 U/Min. zu erreichen ist.

Sie sind zudem eingerichtet, die 2. Bedingung zu erfüllen, durch die am Arbeitspunkt mit 0,5 kW eine Drehzahl n von höchstens ca. 143 U/Min. zu erreichen ist.

Bei einem weiteren Ausführungsbeispiel einer Handwerkzeugmaschine 12 beträgt die abgegebene Schlagleistung PS am Arbeitspunkt 0,45 kW bei einer Drehzahl n von ca. 7*10¹ U/Min. Die Steigung am Arbeitspunkt, also bei einer abgegebenen Schlagleistung von 0,45 kW, beträgt 0,05 U/Min. / W, d. h. bei einer infinitesimalen Änderungen der abgegebenen Schlagleistung PS ändert sich die Drehzahl n um 0,05 U/Min. / W. Diese Handwerkzeugmaschine 12 entspricht somit gleichzeitig den Bedingungen 1, 2 und 3. Sie weist auch bei einem Teillastbetrieb, d. h. bei abgegebenen Schlagleistungen PS von unter 0,45 kW eine besonders hohe Effizienz auf.

## Patentansprüche

1. **Handwerkzeugmaschine (12),** insbesondere Bohrhammer, mit einem Schlagwerk (32) und einem Drehantrieb (34), wobei die Handwerkzeugmaschine (12) eingerichtet ist, ein Werkzeug (18) mit einer Drehzahl n um eine Längsachse (L) des Werkzeugs (18) zu rotieren und mit einer abgegebenen Schlagleistung PS entlang der Längsachse (L) mit einer Schlagbewegung anzutreiben, und wobei die Handwerkzeugmaschine (12) tragbar ist,
**dadurch gekennzeichnet, dass** an einem Arbeitspunkt der Handwerkzeugmaschine (12) wenigstens eine der Bedingungen
1. das Verhältnis der abgegebenen Schlagleistung PS zur Drehzahl n beträgt mindestens 3,5 W/U/Min.;
2. in Abhängigkeit von der abgegebenen Schlagleistung PS beträgt die Drehzahl n höchstens ((PS/W-300)^2/2000+150) U/Min.;
3. bei einer infinitesimalen Änderungen der abgegebenen Schlagleistung PS ändert sich die Drehzahl n um höchstens 0,1 U/Min. / W;
erfüllt ist.

2. Handwerkzeugmaschine nach dem vorhergehenden Anspruch, **dadurch gekennzeichnet, dass** die Handwerkzeugmaschine (12) höchstens eine Antriebseinheit (36), insbesondere einen Motor, aufweist, durch die das Schlagwerk (32) und der Drehantrieb (34) gemeinsam antreibbar sind.

3. Handwerkzeugmaschine nach einem der vorhergehenden Ansprüche, **dadurch gekennzeichnet, dass** die abgegebene Schlagleistung PS zumindest am Arbeitspunkt zwischen 200 W und 2000 W, vorzugsweise zwischen 200 W und 1000 W, beträgt.

4. Handwerkzeugmaschine nach einem der vorhergehenden Ansprüche, **dadurch gekennzeichnet, dass** das Schlagwerk (32) als elektrisches, beispielsweise als elektropneumatisches, Schlagwerk ausgebildet ist.

5. Handwerkzeugmaschine nach einem der vorangehenden Ansprüche, **dadurch gekennzeichnet, dass** die Handwerkzeugmaschine ein mehrstufiges Getriebe aufweist.

6. Handwerkzeugmaschine nach einem der vorhergehenden Ansprüche, **dadurch gekennzeichnet, dass** die Handwerkzeugmaschine (12) eine Werkzeugerkennungsvorrichtung zur Identifikation eines Typs des in der Werkzeugaufnahme (16) eingesetzten Werkzeugs (18) aufweist und/oder dass sie derart eingerichtet ist, dass der Typ des in der Werkzeugaufnahme (16) eingesetzten Werkzeugs (18) durch einen Benutzer der Handwerkzeugmaschine (12) einstellbar ist.

7. Handwerkzeugmaschine nach einem der vorhergehenden Ansprüche, **dadurch gekennzeichnet, dass** die Handwerkzeugmaschine eine pneumatische, insbesondere eine elektropneumatische, Bohrkleinfördereinrichtung (28) aufweist.

8. Handwerkzeugmaschine nach einem der vorhergehenden Ansprüche, **dadurch gekennzeichnet, dass** die Handwerkzeugmaschine (12) kabellos betreibbar ist, wobei sie vorzugsweise einen Akkumulator, insbesondere einen Lithium-haltigen Akkumulator, aufweist.

9. Handwerkzeugmaschine nach einem der vorhergehenden Ansprüche, umfassend wenigstens eine Freilaufkupplung, ein Kulissengetriebe oder ein Kreisschubgetriebe.

10. Werkzeug (18) für eine Handwerkzeugmaschine (12) nach einem der vorhergehenden Ansprüche, umfassend eine Werkzeugspitze (24), einen Werkzeugschaft (20) sowie ein Einsteckende (22) zur Aufnahme des Werkzeugs (18) in der Werkzeugaufnahme (16) der Handwerkzeugmaschine (12), wobei zumindest entlang des Werkzeugschafts (20) ein Materialtransportkanal (26) ausgebildet ist, **dadurch gekennzeichnet, dass** der Materialtransportkanal (26) eine Mindestquerschnittsfläche von 19 mm² oder mindestens von 6 %, besonders bevorzugt von mindestens 12%, der Querschnittsfläche des durch das Werkzeug erzeugbaren Bohrloches aufweist.

11. Werkzeug nach dem vorhergehenden Anspruch, **dadurch gekennzeichnet, dass** das Werkzeug (18) als Saugbohrer ausgebildet ist.

12. Handwerkzeugmaschinensystem (10), umfassend eine Handwerkzeugmaschine (12) nach einem der Ansprüche 1 bis 9 und ein Werkzeug (18) nach einem der Ansprüche 10 oder 11.
